# EUROPEAN PATENT APPLICATION

(11) **EP 2 112 480 A1**
(43) Date of publication of application: **28.10.2009**
(21) Application number: 08425272.5
(22) Date of filing: 21.04.2008
(51) Int. Cl.: G01F 23/00

(54) **Device and method for the correct automatic reading of the engine oil level**

(71) Applicant: Iveco S.p.A., 10156 Torino (IT)
(72) Inventor: Bertozzi, Franco, 10040 Druento (IT)
(74) Representative: Cinquantini, Bruno

(57) **Abstract**

This invention relates to a device and a method for the correct measuring of the engine oil level regardless of the longitudinal or the transversal inclination of the vehicle.

In particular, by means of an inclination sensor, the device and the method according to this invention allow to avoid the driver to receive an incorrect indication about the engine oil level in case the vehicle is on a slope when the automatic measuring of the oil level is carried out, generally when the driver turns the starting key when the engine is started.

## Description

This invention relates to a device and a method for the correct measurement of the engine oil level regardless of the longitudinal and/or the transversal inclination of the vehicle.

As is known, at present all the vehicles have at least an electric system for the automatic detection of the engine oil level. This system may comprise, for example, a level sensor of the hot wire type. The functioning of this sensor is extremely simple: the sensor is constituted by a conductor whose electric resistance varies when the sensor is immersed in air or in another means, therefore when the oil level varies the resistance of the element varies and it is possible to associate an oil level value to a resistance value.

This electric detection system of the engine oil level is then associated to an electronic control unit which processes the resistance value of the sensor and provides the driver with an indication of the engine oil level by means of an oil level indicator in the cabin. This indicator may be also a simple warning light.

If the engine have been stopped for enough time to allow the oil to collect into the sump, when the starting key is turned in "accessories" position, the automatic measurement of the oil level is carried out before starting the engine, and the driver sees on the dashboard the level indicator.

If the vehicle is parked on a slope, however, the oil level measurement will be incorrect, because the oil level in the sump is not parallel to the crankcase.

In particular, in the case of the industrial vehicles, where the engine, and therefore the oil sump, have considerable dimensions, even an inclination of a few degrees may remarkably affect the precision of the oil level measurement.

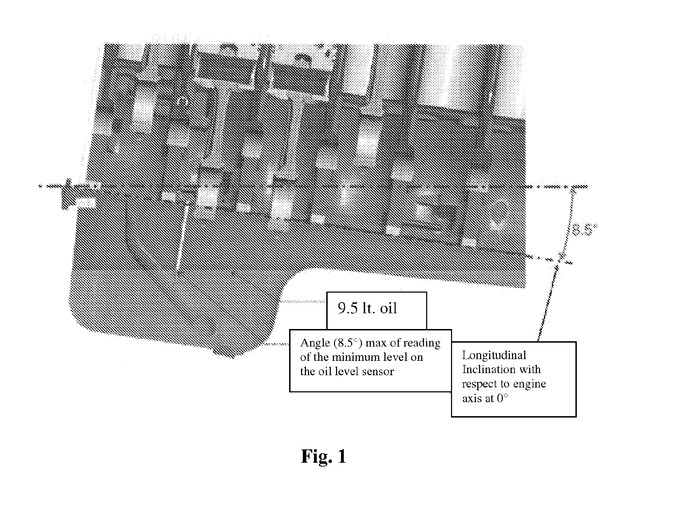

See for example figure 1, which schematically shows a high-displacement six-cylinder diesel engine. In this type of engines the oil sump contains about 9 -10 litres of oil, and has therefore a considerable internal volume. With a longitudinal inclination of about 8° the electric sensor would read an oil level value below the minimum value, even if the actual quantity of oil is higher.

Therefore the oil level indication would be altered if the vehicle is started when it is not on a flat ground, and the driver would receive an incorrect indication of the oil level. In particular, if the level indicator is a warning light, the driver would receive an alarm message for a low engine oil level, when, on the contrary, the oil level is not below the minimum level.

The main task of this invention is to solve the drawbacks described above that affect the oil level measuring systems known in the prior art.

In particular, in the scope of this task, the aim of this invention is to provide a device and a method for the automatic detection of the engine oil level allowing to always obtain a correct oil level indication, even when the vehicle is not on a flat ground.

This task and these purposes, and others that are explained below, are achieved by a device for detecting the engine oil level of the type comprising a level sensor suitable for sending an electric signal to a control unit, an electronic control unit for processing said signal, and an oil level indicator in the cabin, **characterized in that** it further comprises an inclination sensor connected to said electronic control unit and suitable for detecting the inclination of the vehicle, as to allow said control unit to correct the oil level value according to the data corresponding to the vehicle inclination and to send a correct signal to the level indicator in the cabin, even when the vehicle is inclined.

Moreover, the task and the purposes that are object of this invention are achieved by a method for detecting the engine oil level comprising the following steps:
- detect by means of an oil level sensor a data corresponding to the engine oil level;
- send this data to an electronic control unit;
- detect a data corresponding to the vehicle inclination by means of an inclination sensor;
- send this vehicle inclination data to said electronic control unit;
- correct the oil level data according to the vehicle inclination data, by means of the data processing by said electronic control unit;
- send the data corrected by the control unit to a level indicator placed in the cabin.

Further characteristics and advantages of the present invention will become clear from the following detailed description, that is merely illustrative and not limitative and is shown in the figures that are attached hereto, in which:
figure 1 shows a schematic side view of an internal-combustion engine longitudinally inclined;
figure 2 shows a diagram of the device according to a first embodiment of this invention;
figure 3 shows a diagram of the device according to a second embodiment of this invention.

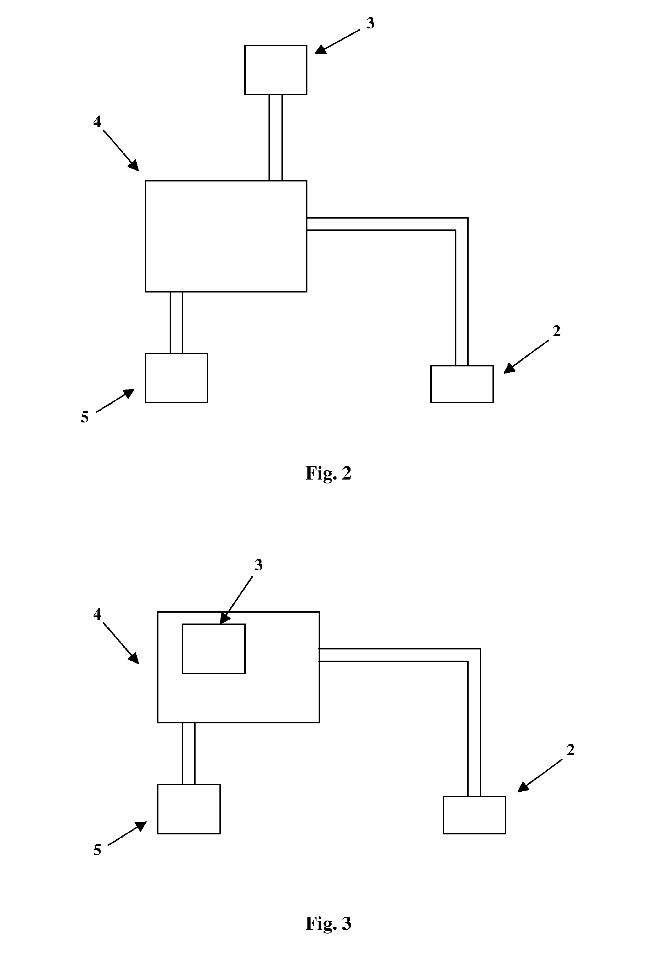

A first embodiment of the device 1 for detecting the engine oil level according to this invention is shown in figure 2. In this embodiment an inclination sensor 3 detects the vehicle inclination providing the data to a control unit 4 which may be the electronic control unit already present on the vehicle or a new control unit specifically provided for this purpose.

In particular, the inclination sensor 3 may be external to said control unit 4, as shown in figure 2, or it may be integrated in the control unit itself, as shown in figure 3.

In case the inclination sensor 3 is a low precision sensor, it is possible to configure the system in such a way that the inclination data sent by the sensor 3 informs the control unit 4 that the vehicle is inclined. This data makes the control unit prevent the automatic control of the oil level when the driver turns the starting key. This way, if the vehicle inclination data exceeds a predetermined threshold value, the control unit avoids the visualization of an incorrect low level signal to the driver, in particular by means of the oil level indicator 5.

On the contrary, if the inclination sensor is a last generation sensor suitable for measuring with high precision the vehicle trim in both the longitudinal and the transversal axis, it is possible to correct the oil level data according to the vehicle inclination data, in order to assure that the data sent to the driver is always correct.

At present it is possible to use, for example, sensor with a precision level of 1024 signal points in a 90° arc, that means a precision of a tenth of a degree.

The system may be calibrated with the vehicle on a flat ground and according to the dimensional and structural characteristics of the oil sump, that is according to the vehicle engine.

Therefore it has been shown that the device and the method for detecting the engine oil level according to the present invention achieves the purpose and the objects proposed.

In particular, it has been shown that the device and the method according to this invention allow to avoid the display of an oil level alarm signal to the driver, because of an incorrect measuring by the electric device, due to the fact that the vehicle is not on a flat ground when the measurement is carried out.

Moreover, it has been shown that the device and the method according to this invention allow to always provide a correct oil level indication, regardless of the vehicle inclination when the driver turns the starting key and the oil level automatic measuring starts.

It will be apparent to the person skilled in the art that various modifications can be conceived and reduced to practice without departing from the scope of the invention.

Therefore, the scope of the claims is not limited to the illustrations or the preferred embodiments shown in the description as an example, but rather the claims include all the patentable novelties deriving from the present invention, including all the equivalent embodiments for a person skilled in the art.

## Claims

1. Device (1) for detecting the engine oil level of the type comprising a level sensor (2) suitable for sending an electric signal to a control unit, an electronic control unit (4) for processing said signal, and an oil level indicator (5), **characterized in that** it further comprises an inclination sensor (3) connected to said electronic control unit (4) and suitable for detecting the inclination of the vehicle, as to allow said control unit (4) to correct the oil level value according to the data correspondent to the vehicle inclination and to send a correct signal to the level indicator (5) even when the vehicle is inclined.

2. Device (1) according to the previous claim, **characterized in that** said inclination sensor (3) is placed inside said electronic control unit (4).

3. Device (1) according to claim 1, **characterized in that** said inclination sensor (3) is placed outside said electronic control unit (4).

4. Device (1) according to one or more previous claim, **characterized in that** said inclination sensor (3) is a sensor able to detect up to 1024 detection point in a 90° arc.

5. Method for detecting the engine oil level comprising the following steps:
a) detect by means of an oil level sensor (2) a data corresponding to the engine oil level;
b) send this data to an electronic control unit (4);
c) detect a data corresponding to the vehicle inclination by means of an inclination sensor (3);
d) send this vehicle inclination data to said electronic control unit (4);
e) compare the vehicle inclination data to a predetermined threshold value;
f) in case said vehicle inclination data exceeds said threshold value the control unit (4) prevents the display of the oil level data on the oil level indicator (5) visible to the driver.

6. Method according to the previous claim, wherein the steps e) and f) are replaced respectively by the following steps:
e1) correct the oil level data according to the vehicle inclination data, by means of the data processing by said electronic control unit (4);
e2) send the data correct by the control unit (4) to a level indicator (5) visible to the driver.
